# EUROPÄISCHE PATENTSCHRIFT

(11) **EP 3 749 873 B1**
(45) Veröffentlichungstag und Bekanntmachung des Hinweises auf die Patenterteilung: **13.03.2024**
(21) Anmeldenummer: 19701764.3
(22) Anmeldetag: 23.01.2019
(51) Int. Cl.: F16D 1/08

(54) **VERFAHREN ZUM KLEMMVERBINDEN EINES HOHLWELLENBEREICHS MIT EINER WELLE MITTELS EINES KLEMMRINGS UND ANORDNUNG ZUR DURCHFÜHRUNG DES VERFAHRENS**
METHOD FOR THE CLAMPING CONNECTION OF A HOLLOW SHAFT REGION TO A SHAFT BY MEANS OF A CLAMPING RING, AND ARRANGEMENT FOR CARRYING OUT THE METHOD
PROCÉDÉ DESTINÉ À RACCORDER PAR SERRAGE UNE ZONE D'ARBRE CREUX À UN ARBRE AU MOYEN D'UNE BAGUE DE SERRAGE ET SYSTÈME DE MISE EN OEUVRE DU PROCÉDÉ

(30) Priorität: 09.02.2018 DE 102018001079
(43) Veröffentlichungstag der Anmeldung: 16.12.2020
(73) Patentinhaber: SEW-EURODRIVE GmbH & Co. KG, 76646 Bruchsal (DE)
(72) Erfinder: SCHILLINGER, Jens, 76437 Rastatt (DE); HALLER, Sascha, 76135 Karlsruhe (DE)
(86) Internationale Anmeldenummer: PCT/EP2019/025022
(87) Internationale Veröffentlichungsnummer: WO 2019/154560

(56) Entgegenhaltungen:
- WO-A1-2017/094171
- DE-A1-102011 013 887
- US-A- 4 830 297

## Beschreibung

Die Erfindung betrifft **eine Anordnung und** ein Verfahren zum Klemmverbinden eines Hohlwellenbereichs mit einer Welle mittels eines Klemmrings und eine Anordnung zur Durchführung des Verfahrens.

Aus der DE 101 55 581 A1 ist eine radiale Klemmnabe bekannt. Dabei wird der Klemmring im entspannten Zustand montiert und dann durch Betätigen der Schraube weiter aufgeschrumpft.

**Aus der** DE 10 2011 013 887 A1 **ist als nächstliegender Stand der Technik eine Klemmkupplung zur drehfesten Verbindung zweier drehender Teile, vorzugsweise Welle und Nabe, bekannt.**

**Aus der** US 4 830 297 A **ist eine Klemmverbindung bekannt.**

**Aus der** WO 2017 / 094 171 A1 **ist ein Klemmring für eine Klemmverbindung bekannt.**

Der Erfindung liegt daher die Aufgabe zugrunde, eine Klemmverbindung weiterzubilden:
Erfindungsgemäß wird die Aufgabe bei dem Verfahren nach den in Anspruch 4 und bei der Anordnung nach den in Anspruch 1 angegebenen Merkmalen gelöst.

**Wichtige Merkmale bei der Anordnung sind, dass sie** zum Klemmverbinden eines Hohlwellenbereichs, insbesondere Adapterwelle, mit einer Welle vorgesehen ist,
wobei die Welle in den Hohlwellenbereich eingeführt ist, auf welchen der Klemmring aufgesteckt ist,
wobei der Klemmring einen radial und axial durchgehenden Schlitz aufweist,
wobei eine tangential gerichtete Stufenbohrung im Klemmring angeordnet ist, welche eine Schraube aufnimmt,
wobei die Schraube in einen Gewindebereich der Stufenbohrung eingeschraubt ist, welche auf der von der Stufe der Stufenbohrung abgewandten Seite des Schlitzes angeordnet ist,
wobei **der von der Schraube überdeckte Raumbereich,** insbesondere der Schraubenkopf begrenzt ist durch ein mit dem Klemmring verbundenes Begrenzungselement, welches auf der von der Stufe abgewandten Seite des Schraubenkopfes angeordnet ist.

Von Vorteil ist dabei, dass einfache kostengünstige Bauteile verwendbar sind.

**Erfindungsgemäß** ist das Begrenzungselement in eine Stufenbohrung eingepresst, deren in die die Schraube aufnehmende Stufenbohrung mündender Randbereich gewölbt ist, insbesondere also nicht eben ist, und/oder deren Stufe eben ist. Von Vorteil ist dabei, dass das Begrenzungselement sehr nah an der Schraube anordenbar ist, so dass große Querkräfte beim Abstützen, insbesondere beim berührenden Begrenzen der Schraube, in das Begrenzungselement einleitbar sind. Außerdem ist ein einfaches Einfädeln und verbessertes Zentrieren des Begrenzungselements in die Stufenbohrung beim Einpressen erreichbar.

Darüber hinaus bewirkt die tiefer im Klemmring liegende und daher eben ausgeführte Stufe der das Begrenzungselement aufnehmenden Stufenbohrung eine rundum gleichmäßige Bruchfestigkeit des inneren Randes der Stufe. Somit ist die Dimensionierung des Begrenzungselements und der Stufenbohrung in fachmännischer einfacher Weise ermöglicht. Hingegen wäre bei gewölbter inneren Berandung keine fachmännisch übliche weise anwendbar, da die Geometrie hierbei unüblich komplex ist und der Fachmann hier nicht auf ein allgemein übliches Fachwissen zurückgreifen kann.

Dabei ist zu beachten, dass bei am Begrenzungselement berührend anliegender Schraube die Reibkraft mit zunehmendem Drehen der Schraube stark zunimmt und dabei eine zunehmende Querkraft auf das Begrenzungselement wirkt, welche nicht parallel zur Richtung der Schraubachse der Schraube gerichtet ist, sondern zunehmend schräg hierzu.

Erfindungsgemäß ist also ein sehr dünner Stift als Begrenzungselement verwendbar und somit ein Auswuchten des Klemmrings vermeidbar. Hierzu wird auch die Schraube entsprechend dimensioniert beziehungsweise das Material der Schraube geeignet gewählt. Besonders vorteilhafte Reibverhältnisse und Schutz des Gewindebereichs der Staufenbohrung sind durch Materialwahl erreichbar, wie beispielsweise der Ausführung von Klemmring und Schraube aus Stahl und Ausführung des Begrenzungselements aus Teflon oder einem Kunststoff. Alternativ ist auch auf der in Umfangsrichtung der Schraube gegenüberliegenden Seite Material ausnehmbar.

Bei einer vorteilhaften Ausgestaltung weist der Hohlwellenbereich eine Vertiefung, insbesondere eine radial gerichtete Vertiefung, auf, in welchen ein Gewindestift, insbesondere ein Gewindestift aus Stahl, zumindest teilweise hineinragt,
welcher in eine radial gerichtete Gewindebohrung des Klemmrings eingeschraubt ist. Von Vorteil ist dabei, dass eine relative Ausrichtung eines Schlitzes des Hohlwellenbereichs zum Schlitz des Klemmrings erreichbar ist.

Bei einer vorteilhaften Ausgestaltung weist der Hohlwellenbereich zumindest einen radial durchgehenden, sich axial, also parallel zur Drehachse der Welle und des Hohlwellenbereichs, erstreckenden Schlitz auf. Von Vorteil ist dabei, dass eine größere Elastizität des Hohlwellenbereichs erreichbar ist.

Bei einer vorteilhaften Ausgestaltung ist das Begrenzungselement als Stift ausgeführt, welcher tangential ausgerichtet ist. Von Vorteil ist dabei, dass eine kostengünstige einfache Ausführung ermöglicht ist.

Bei einer vorteilhaften Ausgestaltung ist die Schraube tangential ausgerichtet. Von Vorteil ist dabei, dass die Schraube senkrecht zur Schlitzebene des Schlitzes ausrichtbar ist.

Bei einer vorteilhaften Ausgestaltung ist der Stift zur Schraube senkrecht ausgerichtet. Von Vorteil ist dabei, dass der Stift in einer Querbohrung einpressbar ist.

**Erfindungsgemäß** ist das Begrenzungselement aus Teflon oder einem Kunststoff gefertigt und die Schraube und/oder der Klemmring aus Stahl. Von Vorteil ist dabei, dass das Schraubgewinde schützbar ist gegen Überlastung, da das Begrenzungselement zuvor verformt wird.

Wichtige Merkmale der Erfindung bei dem Verfahren zum Klemmverbinden eines Hohlwellenbereichs, insbesondere Adapterwelle, mit einer Welle mittels eines Klemmrings sind, dass der Klemmring einen Schlitz, insbesondere einen radial und axial durchgehenden Schlitz, aufweist,
wobei die Schlitzweite des Schlitzes mittels einer Schraube einstellbar ist,
wobei **der von der Schraube überdeckte Raumbereich,** insbesondere der Bewegungsfreiheitsgrad der Schraube in Richtung der Schraubachse und/oder der beim Drehen der Schraube von der Schraube überdeckte Raumbereich, mittels eines mit dem Klemmring verbundenen Begrenzungselements begrenzt ist oder wird,
wobei in einem ersten Verfahrensschritt mittels der Schraube der Klemmring derart vorgespannt wird, dass die Schlitzweite einen größeren Wert erreicht als die Schlitzweite im entspannten Zustand des Klemmrings erreicht,
wobei danach in einem zweiten Verfahrensschritt der Klemmring auf den Hohlwellenbereich aufgesteckt wird,
wobei danach in einem dritten Verfahrensschritt, insbesondere mittels Betätigens der Schraube, die Schlitzweite verringert wird, bis der Klemmring entspannt ist und/oder bis die vorgesehene kraftschlüssige Verbindung des Hohlwellenbereichs mit der Adapterwelle erreicht wird.

Von Vorteil ist dabei, dass der Arbeitsbereich des Klemmrings vergrößert ist. Denn durch die Vorspannung mittels Aufweiten des Klemmrings ist im Gegensatz zum Stand der Technik der Arbeitsbereich viel größer. Nach dem Aufstecken des Klemmrings entspannt sich dieser und drückt schon dabei den Hohlwellenbereich an die Welle. Ein geringfügiges Weiterschrauben der Schraube bewirkt schon die gewünschte Klemmkraft beziehungsweise das gewünschte Klemmmoment. Hingegen ist im Stand der Technik nur bekannt, den Klemmring im entspannten Zustand aufzuschieben und dann durch Betätigen der Schraube weiter aufzuschrumpfen.

Außerdem ist mittels des Begrenzungselements nicht nur die Vorspannung ermöglicht, sondern auch ein vereinfachtes Lösen der Klemmverbindung. Denn beim Lösen wird die Schraube aus dem Gewindebereich der Stufenbohrung herausgeschraubt und dabei der Schraubenkopf am Begrenzungselement abgestützt. Auf diese Weise wird der Klemmring aufgeweitet und ein einfaches Lösen bewirkt.

Der Hohlwellenbereich ist vorzugsweise Bereich einer Adapterwelle, welche in einem Gehäuseteil eines Adapters gelagert ist, welcher zwischen einem Elektromotor und einem Getriebe angeordnet ist. Dabei ist das Gehäuseteil mit einem Lagerflansch oder Gehäuseteil des Elektromotors und mit einem Lagerflansch oder Gehäuseteil des Getriebes verbunden, insbesondere schraubverbunden. Die Adapterwelle ist drehfest mit einem Ritzel verbundenen, welches als das eintreibende Verzahnungsteil des Getriebes fungiert. Die Welle ist vorzugsweise eine Rotorwelle des Elektromotors, welche im Gehäuse des Elektromotors drehbar gelagert ist.

Bei einer vorteilhaften Ausgestaltung wird nach dem zweiten und vor dem dritten Verfahrensschritt der Klemmring in Umfangsrichtung relativ zum Hohlwellenbereich ausgerichtet, insbesondere indem ein in eine Gewindebohrung des Klemmrings eingeschraubter Gewindestift derart weit geschraubt wird, dass der Gewindestift aus dem Klemmring nach radial innen in eine Vertiefung des Hohlwellenbereichs, insbesondere in eine radial gerichtete Vertiefung am Außenumfang des Hohlwellenbereichs, zumindest teilweise hineinragt, insbesondere so, dass eine formschlüssige Sicherung des Klemmrings relativ zum Hohlwellenbereich in Umfangsrichtung erreicht ist. Von Vorteil ist dabei, dass eine Fixierung des Schlitzes des Klemmrings relativ zu einem Schlitz des Hohlwellenbereichs ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

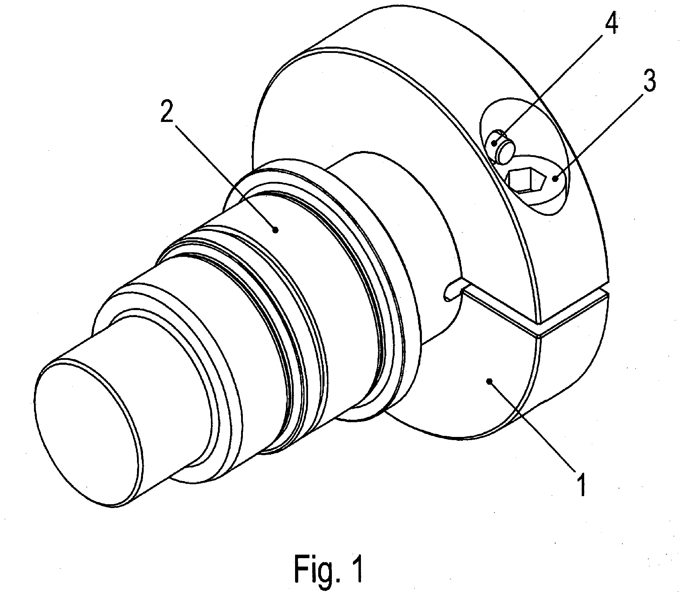

In der Figur 1 ist eine erfindungsgemäße Klemmverbindung, aufweisend einen Klemmring 1 und eine Adapterwelle 2, in Schrägansicht dargestellt.
In der Figur 2 ist ein Querschnitt durch die Klemmverbindung dargestellt.

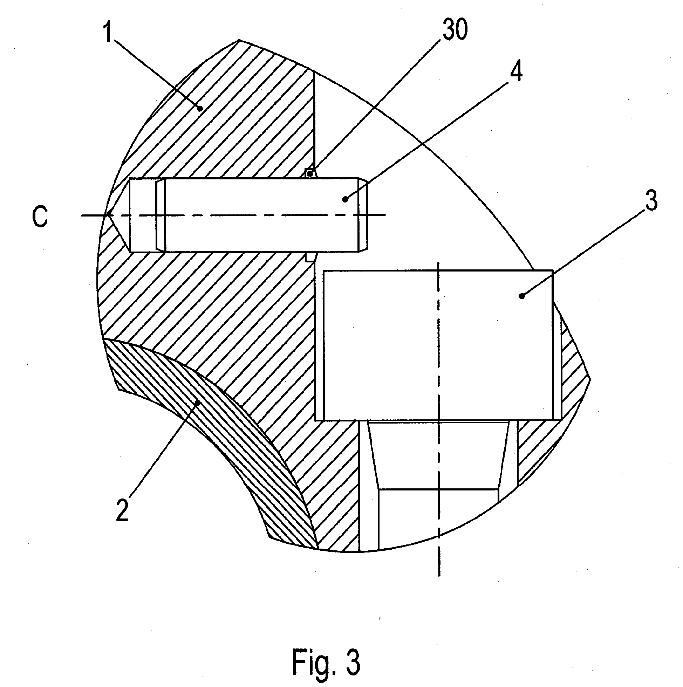

In der Figur 3 ist ein vergrößerter Ausschnitt aus Figur 2 dargestellt.

Wie in den Figuren dargestellt, weist die Klemmverbindung eine Adapterwelle 2 auf, auf welche ein Klemmring 1 aufgeschoben ist, wobei die Adapterwelle 2 in dem von dem Klemmring 1 axial überdeckten Bereich hohl ausgeführt ist, so dass eine Welle in dem vom Klemmring 1 axial überdeckten Bereich in die Adapterwelle 2 eingeführt ist.

Durch Zusammenschrumpfen des Klemmrings 1 sind Adapterwelle 2 und Welle kraftschlüssig verbunden.

Der Klemmring 1 weist an einer Umfangsposition einen radial und axial durchgehenden Schlitz auf. In tangentialer Richtung, insbesondere senkrecht zur Schlitzebene, ist eine Stufenbohrung in den Klemmring 1 eingebracht, wobei auf der von der Stufe der Stufenbohrung abgewandten Seite des Schlitzes die Stufenbohrung einen Gewindebereich aufweist.

Der Gewindebereich ist dabei im engeren Bereich der Stufenbohrung angeordnet.

Eine Schraube 3 ist in den Gewindebereich eingeschraubt. Der Schraubenkopf der Schraube 3 liegt an der Stufe der Stufenbohrung an, wenn die Schraube 3 in den Gewindebereich zunehmend eingeschraubt wird, wobei die Schlitzweite abnimmt. Beim Abnehmen der Schlitzweite wird die Adapterwelle 2, insbesondere der hohle Bereich der Adapterwelle 2, auf die Welle zunehmend aufgeschrumpft.

Zum Lösen der Klemmverbindung wird die Schraube 3 aus dem Gewindebereich herausgeschraubt. Dabei wird die Bewegungsfreiheit der Schraube 3 durch ein Begrenzungselement eingeschränkt. Der Schraubenkopf der Schraube 3 wird also beim Herausschrauben am Begrenzungselement abgestützt und somit die Schlitzweite erhöht, wodurch der Klemmring 1 aufgeweitet wird und leicht von der Adapterwelle 2 abziehbar ist und/oder die Adapterwelle 2 von der Welle leicht lösbar ist.

Das Begrenzungselement ist vorzugsweise als Stift 4 ausgeführt, welcher tangential ausgerichtet ist und in eine Bohrung, insbesondere Sacklochbohrung, zumindest teilweise hineinragt. Der aus dem Klemmring 1 teilweise in die Stufenbohrung hineinragende Stift 4 begrenzt den Bewegungsraum des Schraubenkopfes der Schraube.

Dabei ist der Stift 4 senkrecht zur Achse der Stufenbohrung ausgeführt.

Die Bohrung 30 ist ebenfalls als Stufenbohrung ausgeführt, wobei der breitere Bereich der Stufenbohrung 30 in die für die Schraube 3 vorgesehene Stufenbohrung mündet. Der Rand dieses Mündungsbereichs der Bohrung 30 ist nicht eben, sondern gewölbt.

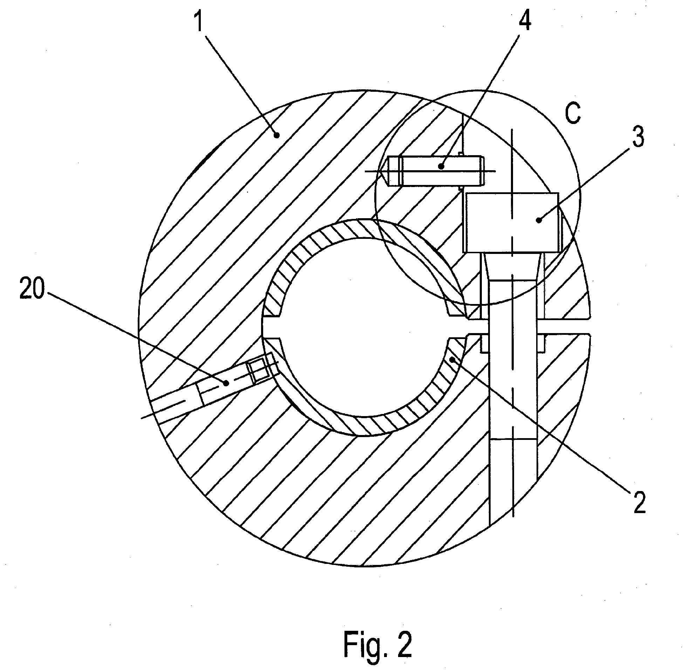

Wie in Figur 2 gezeigt, wiest der Klemmring 1 eine radial durchgehende Gewindebohrung auf, in welche ein Gewindestift 20 eingeschraubt ist und nach radial innen aus dem Klemmring 1 hervorragt in eine an einer Umfangsstelle der Adapterwelle 2 angeordnete radiale Vertiefung. Die radiale Vertiefung ist vorzugsweise nicht durchgehend ausgeführt.

Somit ist die relative Position in Umfangsrichtung zwischen Klemmring 1 und Adapterwelle 2 festgelegt. Der Gewindestift 20 hat in der radialen Vertiefung in radialer Richtung Spiel, ist also in radialer Richtung vom Boden der radialen Vertiefung beabstandet.

Erfindungsgemäß wird bei Montage die Schraube in den Gewindebereich eingeschraubt und danach der Stift 4 in tangentialer Richtung in die Bohrung 30 eingeführt.

Danach wird die Schraube 3 aus dem Gewindebereich herausgedreht, so dass der Schraubenkopf der Schraube sich am Begrenzungselement, insbesondere Stift 4, abstützt und die Schlitzweite größer ist als bei entspanntem Klemmring 1.

Nun wird der Klemmring 1 auf die Adapterwelle 2 in seinem somit vorgespannten Zustand, also aufgeweiteten Zustand, axial aufgeschoben, wobei die Welle zuvor schon in den hohlen Bereich der Adapterwelle 1 eingeschoben ist.

Mittels des Gewindestiftes 20 wird die relative Position in Umfangsrichtung zwischen Adapterwelle 2 und Klemmring 1 festgelegt.

Danach wird die Schraube in den Gewindebereich geschraubt, wobei zunächst der Klemmring 1 entspannt ist und somit schon eine gewisse Schrumpfkraft erzeugt. Sobald mittels des Schraubenkopfes der Schraube 3 auf die Stufe der für die Schraube 3 vorgesehenen Stufenbohrung gedrückt wird, wird beim weiteren Einschrauben der Schraube 3 in die Gewindebohrung die Schrumpfkraft erhöht und somit die Adapterwelle 2 mit der Welle kraftschlüssig, aber mit hoher Andrückkraft angedrückt.

Vorteiligerweise ist der lichte Durchmesser der zentralen Bohrung des Klemmrings 1, also der Ringöffnung des Klemmrings 1, im entspannten Zustand des Klemmrings 1 kleiner als der Außendurchmesser desjenigen Hohlwellenbereichs der Adapterwelle 2, insbesondere im entspannten Zustand des Hohlwellenbereichs, dessen axial überdeckter Bereich vom Klemmring 1 axial überdeckt wird.

### Bezugszeichenliste

1 Klemmring, geschlitzt
2 Adapterwelle
3 Schraube
4 Stift
20 Gewindestift
30 Stufenbohrung

## Patentansprüche

1. Anordnung zum Klemmverbinden eines Hohlwellenbereichs, insbesondere Adapterwelle (2), mit einer Welle,
wobei die Welle in den Hohlwellenbereich eingeführt ist, auf welchen der Klemmring (1) aufgesteckt ist,
wobei der Klemmring (1) einen radial und axial durchgehenden Schlitz aufweist,
wobei eine tangential gerichtete **erste** Stufenbohrung im Klemmring (1) angeordnet ist, welche eine Schraube (3) aufnimmt,
wobei die Schraube (3) in einen Gewindebereich der **ersten** Stufenbohrung eingeschraubt ist, welche auf der von der Stufe der **ersten** Stufenbohrung abgewandten Seite des Schlitzes angeordnet ist,
wobei **der von der Schraube (3) überdeckte Raumbereich,** insbesondere der Schraubenkopf, begrenzt ist durch ein mit dem Klemmring (1) verbundenes Begrenzungselement, welches auf der von der Stufe abgewandten Seite des Schraubenkopfes angeordnet ist,
**wobei der Hohlwellenbereich eine radial gerichtete Vertiefung aufweist, in welchen ein Gewindestift (20) zumindest teilweise hineinragt,**
**welcher in eine radial gerichtete Gewindebohrung des Klemmrings (1) eingeschraubt ist,**
**dadurch gekennzeichnet, dass**
**das Begrenzungselement aus Teflon oder einem Kunststoff gefertigt ist und die Schraube (3) und/oder der Klemmring (1) aus Stahl,**
**wobei das Begrenzungselement als Stift (4) ausgeführt ist, welcher tangential ausgerichtet ist.,**
**wobei das Begrenzungselement in eine zweite Stufenbohrung (30) eingepresst ist, deren in die die Schraube (3) aufnehmende erste Stufenbohrung mündender Randbereich gewölbt ist,**
**wobei die erste Stufenbohrung senkrecht zur zweiten Stufenbohrung (30) ausgerichtet ist.**

2. **Anordnung nach Anspruch 1,**
**dadurch gekennzeichnet, dass**
der Hohlwellenbereich zumindest einen radial durchgehenden, sich axial, also parallel zur Drehachse der Welle und des Hohlwellenbereichs, erstreckenden Schlitz aufweist.

3. Anordnung nach mindestens einem der vorangegangenen Ansprüche,
**dadurch gekennzeichnet, dass**
auf der in Umfangsrichtung der Schraube (3) gegenüberliegenden Seite Material zur Auswuchtung ausgenommen ist vom Klemmring (1).

4. **Verfahren zum Herstellen einer Anordnung nach mindestens einem der vorangegangenen Ansprüche,**
**insbesondere zum Klemmverbinden eines Hohlwellenbereichs, insbesondere Adapterwelle (2), mit einer Welle mittels eines Klemmrings (1),**
wobei der Klemmring (1) einen Schlitz, insbesondere einen radial und axial durchgehenden Schlitz, aufweist,
wobei die Schlitzweite des Schlitzes mittels einer Schraube (3) einstellbar ist,
wobei **der von der Schraube (3) überdeckte Raumbereich,** insbesondere der Bewegungsfreiheitsgrad der Schraube (3) in Richtung der Schraubachse und/oder der beim Drehen der Schraube (3) von der Schraube (3) überdeckte Raumbereich, mittels eines mit dem Klemmring (1) verbundenen Begrenzungselements begrenzt ist oder wird,
wobei in einem ersten Verfahrensschritt mittels der Schraube (3) der Klemmring (1) derart vorgespannt wird, dass die Schlitzweite einen größeren Wert erreicht als die Schlitzweite im entspannten Zustand des Klemmrings (1) erreicht,
wobei danach in einem zweiten Verfahrensschritt der Klemmring (1) auf den Hohlwellenbereich aufgesteckt wird,
wobei danach in einem dritten Verfahrensschritt, insbesondere mittels Betätigens der Schraube (3), die Schlitzweite verringert wird, bis der Klemmring (1) entspannt ist und/oder bis die vorgesehene kraftschlüssige Verbindung des Hohlwellenbereichs mit der Adapterwelle (2) erreicht wird.

5. Verfahren nach Anspruch **4,**
**dadurch gekennzeichnet, dass**
nach dem zweiten und vor dem dritten Verfahrensschritt der Klemmring (1) in Umfangsrichtung relativ zum Hohlwellenbereich ausgerichtet wird, insbesondere indem ein in eine Gewindebohrung des Klemmrings (1) eingeschraubter Gewindestift (20) derart weit geschraubt wird, dass der Gewindestift (20) aus dem Klemmring (1) nach radial innen in eine Vertiefung des Hohlwellenbereichs, insbesondere in eine radial gerichtete Vertiefung am Außenumfang des Hohlwellenbereichs, zumindest teilweise hineinragt,
insbesondere so, dass eine formschlüssige Sicherung des Klemmrings (1) relativ zum Hohlwellenbereich in Umfangsrichtung erreicht ist.

## Claims

1. Arrangement for clampingly connecting a hollow-shaft region, in particular an adapter shaft (2), to a shaft,
wherein the shaft is inserted into the hollow-shaft region onto which the clamping ring (1) is placed,
wherein the clamping ring (1) has a radially and axially through-going slot,
wherein a tangentially directed first stepped bore is arranged in the clamping ring (1) and receives a screw (3),
wherein the screw (3) is screwed into a threaded region of the first stepped bore, which threaded region is arranged on the slot side facing away from the step of the first stepped bore,
wherein the spatial region covered by the screw (3), in particular the screw head, is limited by a limiting element, which is connected to the clamping ring (1) and arranged on the screw head side facing away from the step,
wherein the hollow-shaft region has a radially directed depression into which there projects at least in part a threaded pin (20), which is screwed into a radially directed threaded bore of the clamping ring (1),
**characterised in that**
the limiting element is made of Teflon or a plastics material, and the screw (3) and/or the clamping ring (1) is made of steel,
wherein the limiting element is configured as a pin (4) that is oriented tangentially,
wherein the limiting element is pressed into a second stepped bore (30), the edge region of which opening into the first stepped bore that receives the screw (3) is domed,
wherein the first stepped bore is oriented perpendicularly to the second stepped bore (30).

2. Arrangement according to claim 1,
**characterised in that**
the hollow-shaft region comprises at least one radially through-going slot that extends axially, i.e. in parallel with the axis of rotation of the shaft and of the hollow-shaft region.

3. Arrangement according to at least one of the preceding claims,
**characterised in that**
on the opposite side in the circumferential direction of the screw (3), material is removed from the clamping ring (1) for balancing purposes.

4. Method for producing an arrangement according to at least one of the preceding claims,
in particular for clampingly connecting a hollow-shaft region, in particular an adapter shaft (2), to a shaft by means of a clamping ring (1),
wherein the clamping ring (1) has a slot, in particular a radially and axially through-going slot,
wherein the slot width of the slot is adjustable by means of a screw (3),
wherein the spatial region covered by the screw (3), in particular the freedom of movement of the screw (3) in the direction of the screw axis, and/or the spatial region covered by the screw (3) when the screw (3) is turned is limited by means of a limiting element connected to the clamping ring (1),
wherein in a first method step the clamping ring (1) is preloaded by means of the screw (3) in such a way that the slot width reaches a higher value than the slot width reaches when the clamping ring (1) is in the relaxed state,
wherein, thereafter, in a second method step the clamping ring (1) is placed onto the hollow-shaft region,
wherein, thereafter, in a third method step the slot width is reduced, in particular by actuating the screw (3), until the clamping ring (1) is relaxed and/or until the intended frictional connection of the hollow-shaft region to the adapter shaft (2) is obtained.

5. Method according to claim 4,
**characterised in that**
after the second method step and before the third method step, the clamping ring (1) is oriented relative to the hollow-shaft region in the circumferential direction, in particular by screwing a threaded pin (20), which is screwed into a threaded bore of the clamping ring (1), so far that the threaded pin (20) projects at least in part out of the clamping ring (1) radially inwards into a depression in the hollow-shaft region, in particular into a radially directed depression in the external circumference of the hollow-shaft region,
in particular such as to form-fittingly secure the clamping ring (1) relative to the hollow-shaft region in the circumferential direction.

## Revendications

1. Agencement dévolu à la liaison par serrage, avec un arbre, d'une zone d'un arbre creux et notamment d'un arbre d'adaptateur (2),
ledit arbre étant inséré dans ladite zone d'arbre creux sur laquelle la bague de serrage (1) est emboîtée,
laquelle bague de serrage (1) est munie d'une fente radialement et axialement ininterrompue,
sachant qu'un premier alésage étagé, orienté tangentiellement et recevant une vis (3), est pratiqué dans ladite bague de serrage (1),
ladite vis (3) étant vissée dans une zone taraudée du premier alésage étagé, située du côté de la fente qui pointe à l'opposé du gradin dudit premier alésage étagé,
sachant que la région spatiale couverte par la vis (3), en particulier la tête de ladite vis, est limitée par un élément de limitation relié à la bague de serrage (1) et situé du côté de ladite tête de la vis qui pointe à l'opposé du gradin,
la zone d'arbre creux étant pourvue d'un renfoncement orienté radialement et dans lequel pénètre, au moins en partie, un goujon fileté (20)
vissé dans un perçage taraudé de la bague de serrage (1), orienté radialement,
**caractérisé par le fait que**
l'élément de limitation est fabriqué en du Téflon ou en une matière plastique, et la vis (3) et/ou la bague de serrage (1) consiste(nt) en de l'acier,
ledit élément de limitation étant réalisé sous la forme d'une cheville (4) orientée tangentiellement,
ledit élément de limitation étant emmanché à force dans un second alésage étagé (30) dont la région marginale, débouchant dans le premier alésage étagé recevant la vis (3), est de forme bombée,
ledit premier alésage étagé étant orienté perpendiculairement audit second alésage étagé (30).

2. Agencement selon la revendication 1,
**caractérisé par le fait que**
la zone d'arbre creux est dotée d'au moins une fente radialement ininterrompue qui s'étend dans le sens axial, c'est-à-dire parallèlement à l'axe de rotation de l'arbre et de ladite zone d'arbre creux.

3. Agencement selon au moins l'une des revendications précédentes,
**caractérisé par le fait que**
de la matière est enlevée de la bague de serrage (1), à des fins d'équilibrage, du côté faisant face à la vis (3) dans la direction du pourtour.

4. Procédé de création d'un agencement conforme à au moins l'une des revendications précédentes,
en particulier dévolu à la liaison par serrage avec un arbre, au moyen d'une bague de serrage (1), d'une zone d'un arbre creux et notamment d'un arbre d'adaptateur (2),
ladite bague de serrage (1) étant munie d'une fente, en particulier d'une fente radialement et axialement ininterrompue,
la largeur de ladite fente pouvant être réglée au moyen d'une vis (3),
sachant que la région spatiale couverte par la vis (3), en particulier le degré de liberté de mouvement de ladite vis (3) dans la direction de l'axe de ladite vis, et/ou la région spatiale couverte par la vis (3) au cours de la rotation de ladite vis (3), est (sont) passivement ou activement limitée(s) au moyen d'un élément de limitation relié à la bague de serrage (1), sachant que la bague de serrage (1) est précontrainte au moyen de la vis (3), lors d'une première étape opératoire, de façon telle que la largeur de la fente atteigne une valeur supérieure à celle de la largeur de ladite fente à l'état détendu de ladite bague de serrage (1),
laquelle bague de serrage (1) est ensuite emboîtée sur la zone d'arbre creux, lors d'une deuxième étape opératoire,
ladite largeur de la fente étant ensuite diminuée lors d'une troisième étape opératoire, notamment par actionnement de ladite vis (3), jusqu'à ce que ladite bague de serrage (1) soit détendue et/ou jusqu'à l'obtention de la liaison prévue de ladite zone d'arbre creux avec l'arbre d'adaptateur (2), instaurée par engagement positif.

5. Procédé selon la revendication 4,
**caractérisé par le fait que**
la bague de serrage (1) est orientée par rapport à la zone d'arbre creux dans la direction du pourtour, à l'issue de la deuxième étape opératoire et préalablement à la troisième étape, notamment en ce sens qu'un goujon fileté (20), vissé dans un perçage taraudé de ladite bague de serrage (1), est vissé d'une course telle que ledit goujon fileté (20), dépassant radialement vers l'intérieur au-delà de ladite bague de serrage (1), pénètre au moins en partie dans un renfoncement de la zone d'arbre creux, en particulier dans un renfoncement orienté radialement sur le pourtour extérieur de ladite zone d'arbre creux,
notamment de manière à obtenir, par complémentarité de formes, un arrêt de ladite bague de serrage (1) par rapport à ladite zone d'arbre creux dans la direction du pourtour.
